# EUROPEAN PATENT APPLICATION

(11) **EP 4 362 601 A1**
(43) Date of publication of application: **01.05.2024**
(21) Application number: 22828147.3
(22) Date of filing: 26.05.2022
(51) Int. Cl.: H04W 76/12, H04W 12/033

(54) **DEVICE AND METHOD FOR PROVIDING COMMUNICATION SERVICE FOR ACCESSING IP NETWORK, AND PROGRAM THEREFOR**

(30) Priority: 22.06.2021 JP 2021103687
(71) Applicant: Soracom, Inc., Tokyo 158-0094 (JP)
(72) Inventor: KAWAKAMI Taiki, Tokyo 107-0052 (JP); MATSUI Motokatsu, Tokyo 107-0052 (JP)
(74) Representative: Pitchford, James Edward
(86) International application number: PCT/JP2022/021655
(87) International publication number: WO 2022/270228

(57) **Abstract**

In a communication service for enabling an IoT device to access an IP network, a communication infrastructure connected to communication infrastructure an MNO is used to enable the access without going through a wireless access network for cellular communications. An apparatus receives, from an IoT device, a session generation request including a subscriber identifier of a communication service, and transmits a provisioning call for a GTP tunnel between a first and a second instance included in a communication infrastructure in a cloud connected to the communication infrastructure of the MNO. An ID associated with the subscriber identifier and a transmission source address serving as the transmission source of a GTP-U session are received from the first or the second instance. A provisioning call including the transmission source address and a public key is transmitted to the first instance, the provisioning call being for a VPN tunnel between an IoT device and the first instance. Connection information is transmitted to an IoT device storing a private key corresponding to the public key.

## Description

### TECHNICAL FIELD

The present invention relates to an apparatus and a method for providing a communication service for accessing an IP network, and a program therefor.

### BACKGROUND ART

A wireless communication service that uses a cellular network has been conventionally provided by a mobile network operator (MNO), and a user can start using the same by receiving a SIM card from the MNO under contract with the MNO and attaching the SIM card to a device.

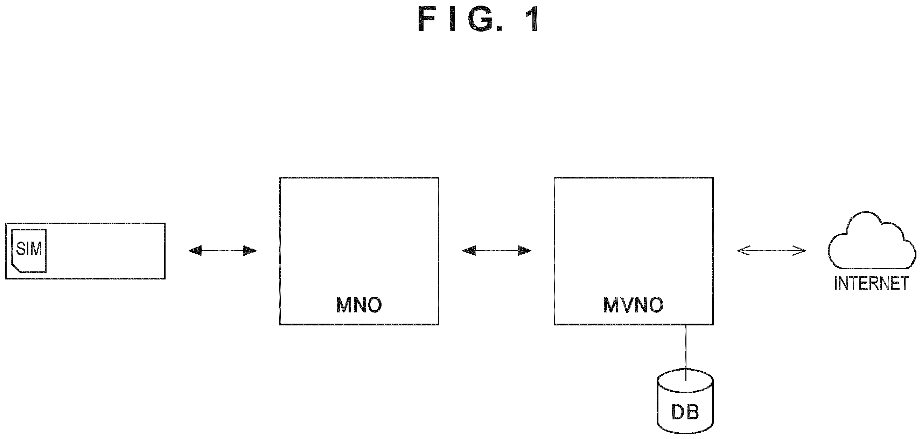

In recent years, the emergence of mobile virtual network operators (MVNOs) has fostered retail sales of wireless communication lines, where a user receives a SIM card from an MVNO, rather than from an MNO. MVNOs can be roughly classified into a type where the MVNO does not own any communication infrastructure in their companies, and a type where the MVNO owns communication infrastructure in their companies and provides a wireless communication service by connecting this communication infrastructure to communication infrastructure of MNOs. Compared to the former, the latter MVNOs (see FIG. 1), which own communication infrastructure in their companies, can set prices in accordance with, for example, communication quality such as a communication speed and a communication capacity, and have attempted to meet various needs.

The development of IoT, wherein a variety of things are provided with a communication function and connected to the Internet, has been noticeably increasing in recent years in accordance with demand related to a wireless communication service. Below, devices that are connectable to computer networks, including the Internet, will be referred to as "IoT devices". An IoT device can access an IP network using cellular communication when a SIM card is attached thereto.

Note that there are also cases where a mobile virtual network enabler (MVNE) that provides a support service for allowing an MVNO to operate smoothly intervenes between an MNO and the MVNO, and the MVNE receives a SIM card provided by the MNO and further provides this SIM card to the MVNO. For example, it is possible for the MVNO, which does not own communication infrastructure in its company, to take a role in retail sales by realizing a wireless communication service via connection between communication infrastructure of the MVNE and communication infrastructure of the MNO.

### SUMMARY OF INVENTION

### TECHNICAL PROBLEM

However, in a case where it is desired to use, in combination with other methods, a method that allows IoT devices to access an IP network without using cellular communication, or more specifically, without using a wireless access network for cellular communication, it is necessary to manage each device by using a communication service different from a wireless communication service provided by the above-described MVNO or MVNE, or to self-develop a communication system for managing a plurality of communication services; this leads to an increase in such costs as management cost and development cost.

The present invention has been made in view of the foregoing problem, and an object thereof is to enable an access to an IP network, without intervention of a wireless access network for cellular communication, in an apparatus and a method for providing an IoT device with a communication service for making such an access using communication infrastructure connected to communication infrastructure of an MNO, and in a program therefor.

Furthermore, a more general object of the present invention is to enable an access to an IP network without intervention of a wireless access network for cellular communication, using communication infrastructure connected to communication infrastructure of an MNO, in a communication service for an IoT device making such an access.

Note that the terms MNO, MVNO, and MVNE may have different definitions. In the present specification, an MNO owns an SGSN of 3G or an S-GW of LTE as communication infrastructure, and an MVNO and an MVNE may be comprehensively referred to as operators that own communication infrastructure connected to the communication infrastructure of the MNO, without distinction. Examples of communication infrastructure owned by these operators include a GGSN of 3G and a P-GW of LTE.

Furthermore, although the above has described an example in which a SIM card is attached to an IoT device, an entity mounted thereon is not limited to a physical SIM card, and may be a semiconductor chip embedded in an IoT device, software provided in a secure area inside a module of an IoT device, and the like; hereinafter, they will be comprehensively referred to as a "SIM". A SIM stores a SIM identifier that identifies this SIM. Examples of a SIM identifier include an IMSI, an ICCID, an MSISDN, and the like.

### SOLUTION TO PROBLEM

The present invention has been made in view of the aforementioned problem, and an object thereof is to provide a method for providing an IoT device with a communication service for accessing an IP network using equipment included in communication infrastructure in a cloud, the communication infrastructure being connected to communication infrastructure of an MNO, the method including: a step of receiving a session generation request including a subscriber identifier for identifying a subscriber of the communication service; a step of storing an ID in association with the subscriber identifier; a step of transmitting, to a first instance and a second instance included in the equipment, a first provisioning call for generating a GTP-U session between the first instance and the second instance, the first provisioning call including the ID; a step of receiving, from the first instance or the second instance, a transmission source address that serves as a transmission source in the GTP-U session as a response to the first provisioning call; a step of transmitting, to the first instance, a second provisioning call for generating a VPN session between the IoT device and the first instance, the second provisioning call including the transmission source address and a first credential; and a step of transmitting connection information to the IoT device that stores the first credential or a second credential corresponding to the first credential, the connection information including the transmission source address and a destination address of the first instance.

Furthermore, a second aspect of the present invention is the method according to the first aspect wherein the connection information includes a port number of the first instance.

Furthermore, a third aspect of the present invention is the method according to the first aspect wherein the first credential is a public key, and the second credential is a secret key corresponding to the public key.

Furthermore, a fourth aspect of the present invention is the method according to the first aspect wherein the session generation request is received from the IoT device.

Furthermore, a fifth aspect of the present invention is the method according to any one of the first to the fourth aspects wherein the first instance and the second instance are instances in a cloud or a public cloud.

Furthermore, a sixth aspect of the present invention is a program for causing an apparatus to execute a method for providing an IoT device with a communication service for accessing an IP network using equipment included in communication infrastructure in a cloud, the communication infrastructure being connected to communication infrastructure of an MNO, the method including: a step of receiving a session generation request including a subscriber identifier for identifying a subscriber of the communication service; a step of storing an ID in association with the subscriber identifier; a step of transmitting, to a first instance and a second instance included in the equipment, a first provisioning call for generating a GTP-U session between the first instance and the second instance, the first provisioning call including the ID; a step of receiving, from the first instance or the second instance, a transmission source address that serves as a transmission source in the GTP-U session as a response to the first provisioning call; a step of transmitting, to the first instance, a second provisioning call for generating a VPN session between the IoT device and the first instance, the second provisioning call including the transmission source address and a first credential; and a step of transmitting connection information to the IoT device that stores the first credential or a second credential corresponding to the first credential, the connection information including the transmission source address and a destination address of the first instance.

Furthermore, a seventh aspect of the present invention is an apparatus for providing an IoT device with a communication service for accessing an IP network using equipment included in communication infrastructure in a cloud, the communication infrastructure being connected to communication infrastructure of an MNO, wherein the apparatus: receives a session generation request including a subscriber identifier for identifying a subscriber of the communication service, and stores an ID in association with the subscriber identifier; transmits, to a first instance and a second instance included in the equipment, a first provisioning call which is intended to generated a GTP-U session between the first instance and the second instance and which includes the ID, and receives, from the first instance or the second instance, a transmission source address that serves as a transmission source in the GTP-U session as a response to the first provisioning call; transmits, to the first instance, a second provisioning call for generating a VPN session between the IoT device and the first instance, the second provisioning call including the transmission source address and a first credential; and transmits connection information to the IoT device that stores the first credential or a second credential corresponding to the first credential, the connection information including the transmission source address and a destination address of the first instance.

Furthermore, an eighth aspect of the present invention is a method for providing a communication service for an IoT device accessing an IP network using communication infrastructure in a cloud, the communication infrastructure including a first instance and a second instance between which a GTP-U session has been generated, the method including: a step of the first instance receiving, from the IoT device, a VPN packet that has encapsulated an IP packet that has been encrypted using the credential or a temporary credential stored in the IoT device; a step of the first instance obtaining the credential or the temporary credential corresponding to a transmission source address or a temporary key included in the VPN packet, and decrypting the encrypted IP packet; a step of the first instance determining the second instance with reference to correspondence between one or more transmission source addresses and transmission destinations in GTP sessions to which the respective transmission source addresses have been allocated, which is held in the first instance, based on a transmission source address included in a header of the decrypted IP packet; a step of the first instance transmitting, to the second instance, a GTP packet in which the decrypted IP packet is used as a GTP payload; and a step of the second instance removing a GTP header from the GTP packet, and transmitting the IP packet used as the GTP payload to an IP network outside or inside the communication infrastructure.

Furthermore, a ninth aspect of the present invention is a program for causing communication infrastructure in a cloud to execute a method for providing a communication service for an IoT device accessing an IP network in a state where a GTP-U session has been generated therebetween, the method including: a step of a first instance included in the communication infrastructure receiving, from the IoT device, a VPN packet that has encapsulated an IP packet that has been encrypted using the credential or a temporary credential stored in the IoT device; a step of the first instance obtaining the credential or the temporary credential corresponding to a transmission source address or a temporary key included in the VPN packet, and decrypting the encrypted IP packet; a step of the first instance determining a second instance included in the communication infrastructure with reference to correspondence between one or more transmission source addresses and transmission destinations in GTP sessions to which the respective transmission source addresses have been allocated, which is held in the first instance, based on a transmission source address included in a header of the decrypted IP packet, the second instance being capable of transmitting an IP packet to an IP network outside or inside the communication infrastructure; and a step of the first instance transmitting, to the second instance, a GTP packet in which the decrypted IP packet is used as a GTP payload.

Furthermore, a tenth aspect of the present invention is communication infrastructure in a cloud, the communication infrastructure being for providing a communication service for an IoT device accessing an IP network, the communication infrastructure including a first instance and a second instance between which a GTP-U session has been generated, wherein: the first instance receives, from the IoT device, a VPN packet that has encapsulated an IP packet that has been encrypted using the credential or a temporary credential stored in the IoT device, obtains the credential or the temporary credential corresponding to a transmission source address or a temporary key included in the VPN packet, and decrypts the encrypted IP packet; the first instance determines the second instance with reference to correspondence between one or more transmission source addresses and transmission destinations in GTP sessions to which the respective transmission source addresses have been allocated, which is held in the first instance, based on a transmission source address included in a header of the decrypted IP packet, and transmits a GTP packet in which the decrypted IP packet is used as a GTP payload to the second instance; and the second instance removes a GTP header from the GTP packet, and transmits the IP packet used as the GTP payload to an IP network outside or inside the communication infrastructure.

According to an aspect of the present invention, a VPN tunnel provides a secret line in an IP network such as the Internet; via this secret line, an IoT device can connect to communication infrastructure which is connected to communication infrastructure of an MNO and which can transmit/receive data to/from the IP network via a GTP tunnel, without intervention of a wireless access network.

### BRIEF DESCRIPTION OF DRAWINGS

FIG. 1 is a diagram schematically showing an MVNO that provides a wireless communication service by connecting communication infrastructure of its own company to communication infrastructure of an MNO.
FIG. 2 is a diagram showing an apparatus for providing a communication service for accessing an IP network according to an embodiment of the present invention.
FIG. 3A is a diagram showing a flow of a method for providing a communication service for accessing an IP network according to an embodiment of the present invention.
FIG. 3B is a diagram showing the flow of the method for providing the communication service for accessing the IP network according to an embodiment of the present invention.
FIG. 4 is a diagram showing a flow of data transmission in a communication service for an IoT device accessing an IP network according to an embodiment of the present invention.

### DESCRIPTION OF EMBODIMENTS

The following describes an embodiment of the present invention in detail with reference to the drawings.

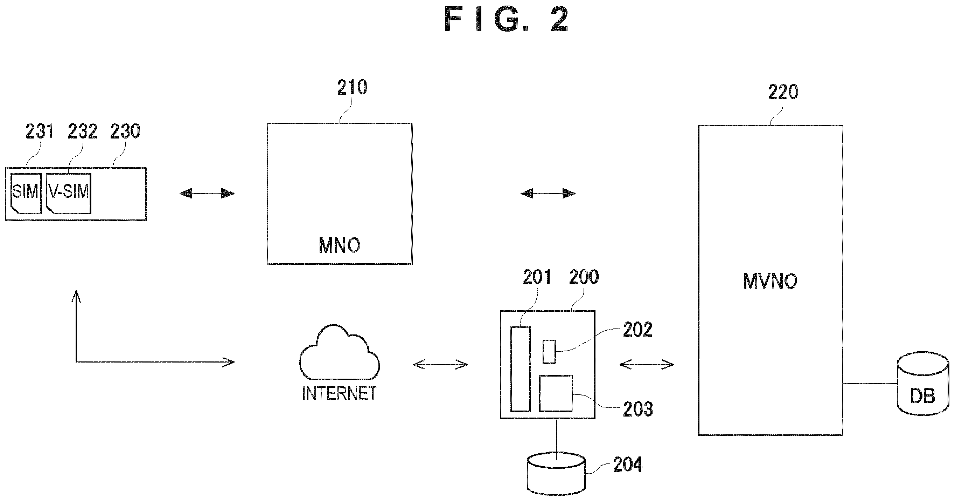

FIG. 2 shows an apparatus for providing a communication service for accessing an IP network according to an embodiment of the present invention. An apparatus 200 communicates with communication infrastructure 220 of an MVNO and an IoT device 230, which are connected to communication infrastructure 210 of an MNO, over an IP network. The apparatus 200 is intended to establish connection for allowing the IoT device 230 to access an IP network, and is therefore also referred to as a connection apparatus. The communication infrastructure 220 of the MVNO is composed of a plurality of instances in a cloud or a public cloud.

Here, in the present specification, a "cloud" refers to a system that can dynamically provision and provide such computing resources as a CPU, a memory, a storage, and network bands in a network in accordance with demands. For example, a cloud can be used via AWS or the like. Furthermore, in the present specification, a "public cloud" refers to a cloud in which computing resources can be provided to a plurality of tenants.

The apparatus 200 can include a communication unit 201 such as a communication interface, a processing unit 202 such as a processor and a CPU, and a storage unit 203 that includes a storage apparatus or a storage medium such as a memory and a hard disk, and can be configured by executing a program for executing various types of processing. The apparatus 200 may include one or more apparatuses, computers, or servers. Furthermore, this program may include one or more programs, and also can act as a non-transitory program product with the program(s) recorded in a computer-readable storage medium. This program can be stored in a storage apparatus or a storage medium such as a database 204 that can be accessed by the storage unit 203 or the apparatus 200 via an IP network, and executed by the processing unit 202. Data that is described below as being stored in the storage unit 203 may be stored in the database 204, or vice versa.

The apparatus 200 can be one or more instances in the cloud or the public cloud, or may be one or more instances in the cloud that are the same as those in the communication infrastructure 220 of the MVNO. Although not illustrated, each instance included in the communication infrastructure 220 of the MVNO can have a hardware configuration similar to that of the connection apparatus 200.

Below, generation of a session necessary for a communication service will be described first, and then transmission of data to an IP network using the generated session will be described.

### Generation of Session

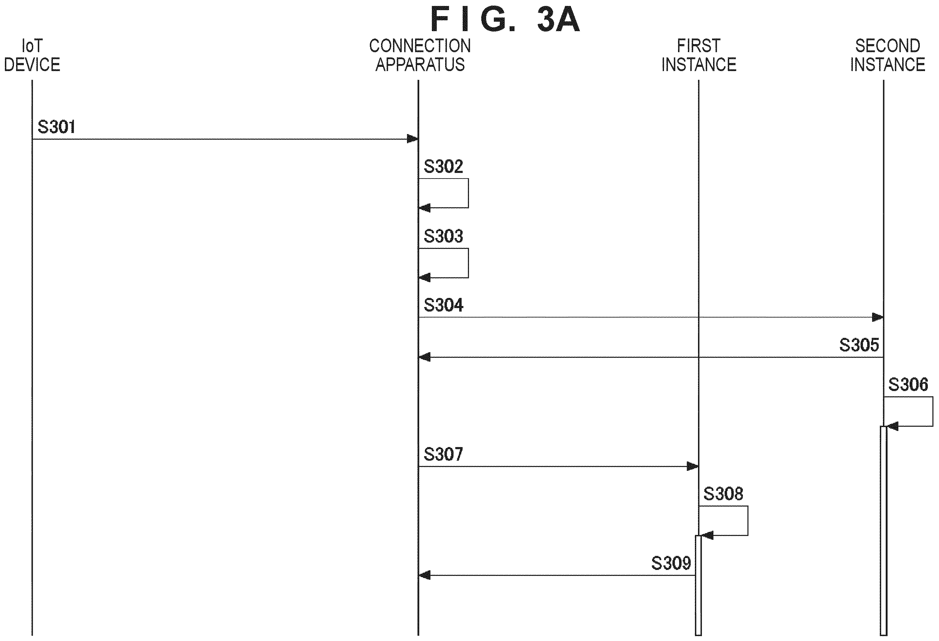

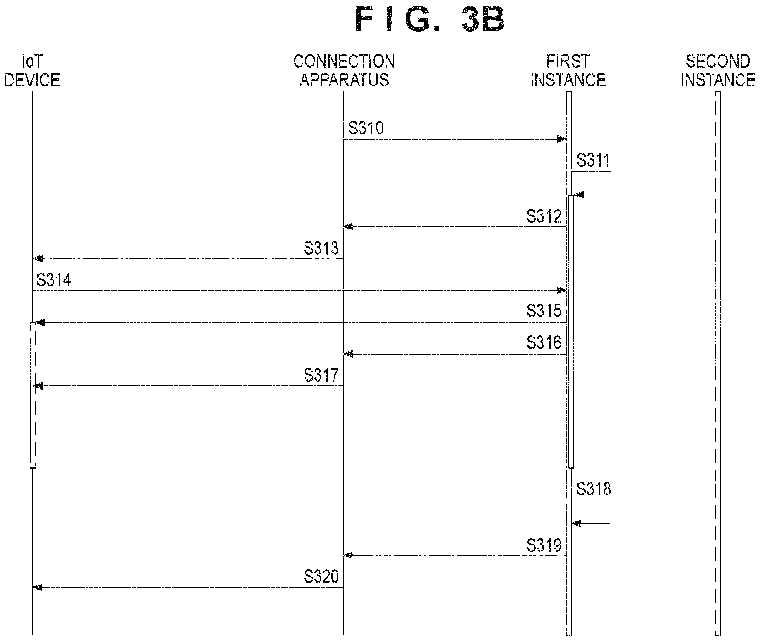

FIGs. 3A and 3B show a flow of a method for providing a communication service for accessing an IP network according to an embodiment of the present invention. First, the apparatus 200 receives, from the IoT device 230, a session generation request that includes a subscriber identifier for identifying a subscriber of this communication service (S301). This session generation request can be transmitted over an Internet communication line other than a cellular line; as an example, it may be transmitted over a fixed Internet line, or may be transmitted via a cellular line.

In FIG. 2, the IoT device 230 stores a SIM identifier 231 that identifies a SIM for using a communication service for accessing an IP network provided via a wireless access network using the communication infrastructure 220 of the MVNO, and also stores a subscriber identifier 232 for using a communication service for accessing an IP network provided without intervention of a wireless access network. In FIG. 2, the subscriber identifier 232 is shown as a "virtual SIM (V-SIM)", for the sake of convenience, because it is considered as a virtual SIM identifier when connection has been established using it. Furthermore, the IoT device 230 may store a token for validly making a session generation request. The IoT device 230 need not necessarily store the SIM identifier 231.

After verifying a token included in the received session generation request as necessary, the connection apparatus 200 generates and stores an ID in association with the subscriber identifier 232 included in this session generation request (S302). Note that it is possible that an apparatus which is other than the IoT device 230 and which can validly access the subscriber identifier 232 transmit a session generation request to the connection apparatus 200 for the IoT device 230.

An example of the apparatus other than the IoT device 230 is a computer used by an administrator who administers the IoT device 230. The administrator can access the subscriber identifier 232; if the administrator is provided with a token necessary for making a session generation request to the connection apparatus 200, the administrator can make a session generation request including the subscriber identifier 232 for the IoT device 230 using the token.
Furthermore, another example of the apparatus other than the IoT device 230 is an authentication server that can authenticate the IoT device 230 using the SIM identifier 231 stored in the IoT device 230 and establish a secret line with the IoT device 230. It can be said that, once the authentication server has received the subscriber identifier 232 from the IoT device 230 via the established secret line, the authentication server is validly accessing the subscriber identifier 232. In a case where the SIM identified by the SIM identifier 231 has been issued by an operator that owns the communication infrastructure 220 connected to the communication infrastructure 210 of the MNO, this authentication server can act as one or more instances included in the equipment owned by the communication infrastructure 220.

Next, the connection apparatus 200 adopts a first instance and a second instance included in the communication infrastructure 220 (S303), and transmits, to the second instance, a provisioning call for generating a GTP-U session between the first instance and the second instance (S304). This provisioning call can include the ID stored in the connection apparatus 200, and a first destination address of the first instance adopted by the connection apparatus 200, such as an IP address and a host name.

The first instance can be adopted from among a first node group, and the second instance can be adopted from among a second node group. Each instance includes a plurality of servers, and a server from which each instance receives data may be different from a server to which each instance transmits data. When the communication infrastructure 220 of the MVNO provides the IoT device 230 with an access to an IP network via a wireless access network, a first server adopted from among a first server group connected to the communication infrastructure 210 of the MNO, as well as a second server that is connected to the first server and has been adopted from among a second server group, is used. At least a part of the second node group can be the same as at least a part of the second server group.

The second instance transmits, to the connection apparatus 200, a response to the provisioning call to the second instance (S305). Then, the second instance is placed in a state of standby for the GTP-U session (S306). The response can include the ID and a transmission source address, such as an IP address, that serves as a transmission source with respect to the GTP-U session; the transmission source address can be adopted by the second instance. Furthermore, although it has been described here that the state of standby follows the transmission of the response, this order may be reversed. The transmission source address may be allocated by the connection apparatus 200 rather than the second instance. In this case, the provisioning call to the second instance may include the transmission source address. Either way, the second instance can store the transmission source address in association with the ID. Also, in the apparatus 200, the transmission source address can be stored in association with the subscriber identifier 232.

Next, the connection apparatus 200 transmits, to the first instance, a provisioning call for generating the GTP-U session between the first instance and the second instance (S307). This provisioning call can include the ID stored in the connection apparatus 200, the transmission source address, and a second destination address of the second instance adopted by the connection apparatus 200.

Thereafter, the first instance is placed in a state of standby for the GTP-U session (S308). This leads to a state where the GTP-U session is generated between the first instance and the second instance, and a so-called GTP tunnel has been established. The connection apparatus 200 receives a response to the provisioning call to the first instance (S309). Although it is also possible for the first instance to be in the state of standby after transmitting the response, it is preferable that the first instance transmit the response after being placed in the state of standby so as to prevent the occurrence of a time period in which connection cannot be performed.

Then, the connection apparatus 200 transmits, to the first instance, a provisioning call for generating a VPN session between the IoT device 230 and the first instance (S310). This provisioning call includes the transmission source address and a credential associated with the IoT device 230. The credential may be stored in the database 204 in association with the subscriber identifier 232, or may be included in the session generation request from the IoT device 230.

The credential can be, for example, a public key. In this case, the IoT device 230 stores a secret key corresponding to the public key. An encryption method other than a public key encryption method may be used in the VPN session; more generally, it is sufficient that a first credential that is necessary in accordance with an encryption method be transmitted to the first instance, and the first credential or a second credential corresponding thereto be stored in the IoT device 230.

After receiving the provisioning call for generating the VPN session, the first instance stores the transmission source address and the credential, and is placed in a state of standby for the VPN session (S311). Also, the connection apparatus 200 receives a response to the provisioning call from the first instance (S312). In one example, the response can include the transmission source address and the first destination address of the first instance. Although it is possible for the first instance to be in the state of standby after transmitting the response, it is preferable that the first instance transmit the response after being placed in the state of standby so as to prevent the occurrence of a time period in which connection cannot be performed.

Upon receiving the response, the connection apparatus 200 transmits, to the IoT device 230, connection information which includes the transmission source address and the first destination address included in the response, and to which a port number has been added as necessary (S313). In a case where the response from the first instance includes the port number, it is sufficient to transmit the received connection information to the IoT device 230. Based on the connection information, the IoT device 230 performs device provisioning, and attempts to connect to the first instance (S314). Here, an intervening apparatus may exist between the IoT device 230 and the first instance. If a successful response is transmitted from the first instance to the IoT device 230 (S315), a state where a handshake has been successful and a VPN tunnel has been established is achieved. The first instance may be placed in the state of standby for the GTP-U session and the GTP tunnel may be established upon transmission of the successful response to the attempt in response to reception of the attempt, or more generally, after receiving the attempt.

After transmitting the successful response, the first instance may provide the connection apparatus 200 with a notification indicating that it has been placed online, that is to say, connection for communication using the subscriber identifier 232 has been established (S316). Upon receiving this notification, the connection apparatus 200 may, for example, transmit online indication information for indicating that communication using the subscriber identifier 232 is possible to the IoT device 230, or to an apparatus other than the IoT device 230, such as a computer used by the administrator who administers the IoT device 230

(S317). Here, upon receiving the response indicating the successful attempt, the connection apparatus 200 may determine, on its own, that the subscriber identifier 232 has been placed online, and store the determination. Furthermore, the first instance may determine whether a predetermined period has elapsed (S318); in a case where the predetermined period has elapsed, the first instance may provide the connection apparatus 200 with a notification indicating that it has been placed offline, that is to say, connection for communication using the subscriber identifier 232 has been lost (S319). Upon receiving this notification, the connection apparatus 200 may, for example, transmit offline indication information for indicating that communication using the subscriber identifier 232 is not possible, the IoT device 230, or to an apparatus other than the IoT device 230, such as a computer used by the administrator who administers the IoT device 230 (S320). How to define a starting time point and a duration of the aforementioned predetermined period in order to confirm the existence of the VPN tunnel, may be set in accordance with the individual specifications of the VPN technique. An example of the starting time point is a time point of disconnection of the VPN tunnel.

In the foregoing description, in establishing the GTP tunnel, a provisioning call is issued to the second instance, and thereafter, a provisioning call is issued to the first instance; however, an implementation in which this order is reversed is also possible. More generally, it is sufficient to transmit, to the first instance and the second instance included in the equipment owned by the communication infrastructure 220 in a cloud connected to the communication infrastructure 210 of the MNO, a first provisioning call for generating a GTP-U session between the first instance and the second instance, place the first and second instances in the state of standby, and receive a transmission source address of the GTP-U session from the first instance or the second instance.

In a case where the session generation request is transmitted to the connection apparatus 200 from an apparatus other than the IoT device 230, a response to the request is transmitted to the apparatus other than the IoT device 230. When a secret line has been established between the apparatus other than the IoT device 230 and the IoT device 230, device provisioning can be performed by transmitting connection information to the IoT device 230 via the secret line; therefore, it can be said that the connection information is transmitted from the connection apparatus 200 to the IoT device 230.

Furthermore, during a handshake, a temporary credential may be generated using a credential stored in the first instance or a credential corresponding thereto, and the temporary credential may be stored in the first instance. In this case, in the first instance, the temporary credential is associated with the transmission source address. Similarly, the temporary credential is stored also in the IoT device 230. Furthermore, for example, during the first handshake, a temporary key may be generated; in the first instance, this key is associated with the transmission source address, and in addition, the temporary credential is associated with this key.

### Exchange of Data

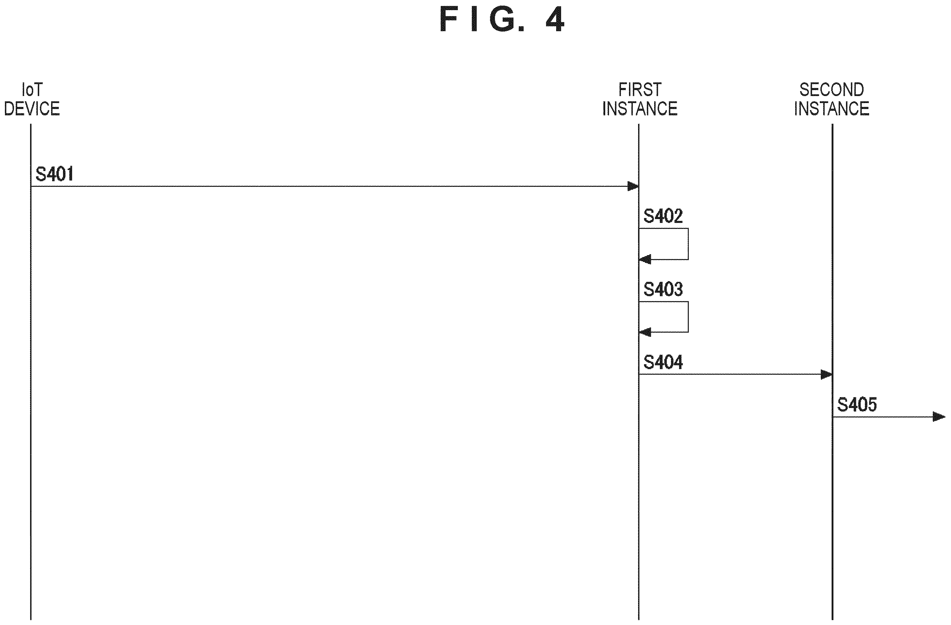

FIG. 4 shows a flow of data transmission in a communication service for accessing an IP network according to a first embodiment of the present invention.

First, the IoT device 230 transmits, to the first instance, an IP packet that has been encrypted using a credential stored in the IoT device 230 or a temporary credential, in such a manner that the IP packet is encapsulated in a VPN packet (S401). The VPN packet includes the encrypted IP packet, and VPN session information related to a VPN session. The VPN session information includes a transmission source address or a temporary key associated therewith. Here, an intervening apparatus may exist between the IoT device 230 and the first instance.

Upon receiving the VPN packet, the first instance obtains the credential or the temporary credential corresponding to the transmission source address or the temporary key associated therewith, which is included in the VPN session information, and attempts to decrypt the encrypted IP packet (S402).

During device provisioning in the process of generation of a session, routing information may be set in the IoT device 230. More specifically, the IoT device 230 may determine whether to use passage through a VPN tunnel in accordance with a transmission destination address after an endpoint of a GTP tunnel for the encrypted IP packet transmitted from the IoT device 230.

Next, based on the transmission source address included in the header of the decrypted IP packet, the first instance determines the second instance, which serves as a transmission destination, with reference to correspondence between one or more transmission source addresses and transmission destinations in GTP sessions to which the respective transmission source addresses have been allocated, which is held in the first instance (S403). Then, the first instance transmits, to the determined second instance, a GTP packet in which the decrypted IP packet is used as a GTP payload (S404). Consequently, the VPN tunnel ends. Each instance includes a plurality of servers, and a server from which each instance receives data may be different from a server to which each instance transmits data.

The second instance removes a GTP header from the received GTP packet, and transmits the IP packet, which is used as the GTP payload, to an IP network outside or inside the communication infrastructure 220 of the MVNO (S405). An ID is included in the GTP header; the second instance can identify a transmission source address with reference to correspondence between IDs and transmission source addresses stored in the second instance, and can further identify a subscriber identifier in a transitive manner with reference to correspondence between transmission source addresses and subscriber identifiers stored in the apparatus 200.

As described above, the VPN tunnel provides a secret line in an IP network such as the Internet, and the IoT device 230 can connect to the communication infrastructure 220 of the MVNO, which performs data communication using GTP protocols, via the IP network without intervention of a wireless access network.

While FIG. 4 shows transmission of data, the communication infrastructure 220 of the MVNO is as follows in a case where data is received from an IP network. When an IP packet addressed to the IoT device 230 has arrived at the second instance, a GTP-U session corresponding to the address of the IoT device 230, which is a transmission destination, is specified, and the IP packet is transmitted to the first instance with a GTP header added thereto. Then, the first instance obtains the IP packet addressed to the IoT device 230 by removing the GTP header from the received GTP packet. A corresponding VPN session is specified from a transmission destination address of the IP packet, the IP packet is encapsulated in a VPN packet using a credential or a temporary credential corresponding to a temporary key associated with the VPN session, and the VPN packet is transmitted to the IoT device 230 via a VPN tunnel. The IoT device 230 processes the IP packet by obtaining the credential or the temporary credential corresponding to the associated temporary key based on VPN session information in the received VPN packet, and by decrypting the IP packet that has been encrypted.

An apparatus which is other than the IoT device 230 and which can validly access the subscriber identifier 232, such as a computer used by an administrator who administers the IoT device 230, may transmit, to the connection apparatus 200, a request for disablement of a VPN session defined by the transmission source address associated with the subscriber identifier 232 or the key corresponding thereto. In this case, upon receiving the request for disablement, the connection apparatus 200 requests the first instance to discard or disable the credential or the temporary credential corresponding to the transmission source address or the key associated therewith, and also updates a billing state that has been stored in association with the subscriber identifier 232 in response to the disablement of the VPN session.

### REFERENCE SIGNS LIST

- 200: apparatus

- 201: communication unit
- 202: processing unit
- 203: storage unit
- 204: database
- 210: communication infrastructure of MNO
- 220: communication infrastructure connected to communication infrastructure of MNO

## Claims

1. A method for providing an IoT device with a communication service for accessing an IP network using equipment included in communication infrastructure in a cloud, the communication infrastructure being connected to communication infrastructure of an MNO, the method comprising:
a step of receiving a session generation request including a subscriber identifier for identifying a subscriber of the communication service;
a step of storing an ID in association with the subscriber identifier;
a step of transmitting, to a first instance and a second instance included in the equipment, a first provisioning call for generating a GTP-U session between the first instance and the second instance, the first provisioning call including the ID;
a step of receiving, from the first instance or the second instance, a transmission source address that serves as a transmission source in the GTP-U session as a response to the first provisioning call;
a step of transmitting, to the first instance, a second provisioning call for generating a VPN session between the IoT device and the first instance, the second provisioning call including the transmission source address and the first credential; and
a step of transmitting connection information to the IoT device that stores the first credential or a second credential corresponding to the first credential, the connection information including the transmission source address and a destination address of the first instance.

2. The method according to claim 1, wherein
the connection information includes a port number of the first instance.

3. The method according to claim 1 or 2, wherein
the first credential is a public key, and
the second credential is a secret key corresponding to the public key.

4. The method according to claim 1, wherein
the session generation request is received from the IoT device.

5. The method according to any one of claims 1 to 4, wherein
the first instance and the second instance are instances in a cloud or a public cloud.

6. A program for causing an apparatus to execute a method for providing an IoT device with a communication service for accessing an IP network using equipment included in communication infrastructure in a cloud, the communication infrastructure being connected to communication infrastructure of an MNO, the method comprising:
a step of receiving a session generation request including a subscriber identifier for identifying a subscriber of the communication service;
a step of storing an ID in association with the subscriber identifier;
a step of transmitting, to a first instance and a second instance included in the equipment, a first provisioning call for generating a GTP-U session between the first instance and the second instance, the first provisioning call including the ID;
a step of receiving, from the first instance or the second instance, a transmission source address that serves as a transmission source in the GTP-U session as a response to the first provisioning call;
a step of transmitting, to the first instance, a second provisioning call for generating a VPN session between the IoT device and the first instance, the second provisioning call including the transmission source address and the first credential; and
a step of transmitting connection information to the IoT device that stores the first credential or a second credential corresponding to the first credential, the connection information including the transmission source address and a destination address of the first instance.

7. An apparatus for providing an IoT device with a communication service for accessing an IP network using equipment included in communication infrastructure in a cloud, the communication infrastructure being connected to communication infrastructure of an MNO, wherein the apparatus
receives a session generation request including a subscriber identifier for identifying a subscriber of the communication service, and stores an ID in association with the subscriber identifier,
transmits, to a first instance and a second instance included in the equipment, a first provisioning call which is intended to generated a GTP-U session between the first instance and the second instance and which includes the ID, and receives, from the first instance or the second instance, a transmission source address that serves as a transmission source in the GTP-U session as a response to the first provisioning call,
transmits, to the first instance, a second provisioning call for generating a VPN session between the IoT device and the first instance, the second provisioning call including the transmission source address and the first credential, and
transmits connection information to the IoT device that stores the first credential or a second credential corresponding to the first credential, the connection information including the transmission source address and a destination address of the first instance.

8. A method for providing a communication service for an IoT device accessing an IP network using communication infrastructure in a cloud, the communication infrastructure including a first instance and a second instance between which a GTP-U session has been generated, and being connected to communication infrastructure of an MNO, the method comprising:
a step of the first instance receiving, from the IoT device, a VPN packet that has encapsulated an IP packet that has been encrypted using the credential or a temporary credential stored in the IoT device;
a step of the first instance obtaining the credential or the temporary credential corresponding to a transmission source address or a temporary key included in the VPN packet, and decrypting the encrypted IP packet;
a step of the first instance determining the second instance with reference to correspondence between one or more transmission source addresses and transmission destinations in GTP sessions to which the respective transmission source addresses have been allocated, which is held in the first instance, based on a transmission source address included in a header of the decrypted IP packet;
a step of the first instance transmitting, to the second instance, a GTP packet in which the decrypted IP packet is used as a GTP payload; and
a step of the second instance removing a GTP header from the GTP packet, and transmitting the IP packet used as the GTP payload to an IP network outside or inside the communication infrastructure.

9. A program for causing communication infrastructure in a cloud to execute a method for providing a communication service for an IoT device accessing an IP network, the communication infrastructure being connected to communication infrastructure of an MNO in a state where a GTP-U session has been generated therebetween, the method comprising:
a step of a first instance included in the communication infrastructure receiving, from the IoT device, a VPN packet that has encapsulated an IP packet that has been encrypted using the credential or a temporary credential stored in the IoT device;
a step of the first instance obtaining the credential or the temporary credential corresponding to a transmission source address or a temporary key included in the VPN packet, and decrypting the encrypted IP packet;
a step of the first instance determining a second instance included in the communication infrastructure with reference to correspondence between one or more transmission source addresses and transmission destinations in GTP sessions to which the respective transmission source addresses have been allocated, which is held in the first instance, based on a transmission source address included in a header of the decrypted IP packet, the second instance being capable of transmitting an IP packet to an IP network outside or inside the communication infrastructure; and
a step of the first instance transmitting, to the second instance, a GTP packet in which the decrypted IP packet is used as a GTP payload.

10. Communication infrastructure in a cloud, the communication infrastructure being for providing a communication service for an IoT device accessing an IP network, and being connected to communication infrastructure of an MNO, the communication infrastructure comprising:
a first instance and a second instance between which a GTP-U session has been generated,
wherein
the first instance receives, from the IoT device, a VPN packet that has encapsulated an IP packet that has been encrypted using the credential or a temporary credential stored in the IoT device, obtains the credential or the temporary credential corresponding to a transmission source address or a temporary key included in the VPN packet, and decrypts the encrypted IP packet,
the first instance determines the second instance with reference to correspondence between one or more transmission source addresses and transmission destinations in GTP sessions to which the respective transmission source addresses have been allocated, which is held in the first instance, based on a transmission source address included in a header of the decrypted IP packet, and transmits a GTP packet in which the decrypted IP packet is used as a GTP payload to the second instance, and
the second instance removes a GTP header from the GTP packet, and transmits the IP packet used as the GTP payload to an IP network outside or inside the communication infrastructure.
